(19) Europäisches Patentamt
European Patent Office
Office européen des brevets

(11) **EP 2 918 366 A1**

(12) **EUROPÄISCHE PATENTANMELDUNG**

(43) Veröffentlichungstag:
16.09.2015 Patentblatt 2015/38

(51) Int Cl.:
*B23K 9/10* (2006.01)   *B23K 9/12* (2006.01)
*B23K 9/167* (2006.01)   *B23K 9/29* (2006.01)

(21) Anmeldenummer: 14001321.0

(22) Anmeldetag: 10.04.2014

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **14.03.2014 DE 102014003634**

(71) Anmelder: **Linde Aktiengesellschaft
80331 München (DE)**

(72) Erfinder: **Siewert, Erwan
80802 München (DE)**

(74) Vertreter: **Gellner, Bernd
Linde AG
Patente und Marken
Dr.-Carl-von-Linde-Strasse 6-14
82049 Pullach (DE)**

(54) **Verfahren zum Wolfram-Inertgasschweißen**

(57)   Die vorliegende Erfindung betrifft ein Verfahren und einen Schweißbrenner zum Wolfram-Inertgasschweißen, wobei ein Lichtbogen (120) zwischen einer nicht abschmelzenden Elektrode (110) und einem Werkstück (151) brennt, wobei die Elektrode (110) in ihrem Inneren einen Hohlraum (200) aufweist, und wobei ein elektrisch leitender Zusatzwerkstoff (210) durch den Hohlraum (200) der Elektrode (110) in Richtung (230a) des Werkstücks (151) zugeführt wird, wobei der Zusatzwerkstoff (210) bestromt wird.

Fig. 1

**Beschreibung**

Die Erfindung betrifft ein Verfahren und einen Schweißbrenner zum Wolfram-Inertgasschweißen, wobei ein Lichtbogen zwischen einer nicht abschmelzenden Elektrode und einem Werkstück brennt, wobei die Elektrode in ihrem Inneren einen Hohlraum aufweist und wobei ein elektrisch leitender Zusatzwerkstoff durch den Hohlraum der Elektrode in Richtung des Werkstücks zugeführt wird.

Stand der Technik

Beim Wolfram-Inertgasschweißen (WIG-Schweißen) handelt es sich um ein Lichtbogenschweißverfahren, das beispielsweise zum Auftragsschweißen, Verschweißen oder Verlöten von ein, zwei oder mehreren Werktücken aus metallischen Werkstoffen verwendet wird. Das Werkstück und eine Wolframelektrode eines entsprechenden Schweißbrenners zum Wolfram-Inertgasschweißen werden dabei elektrisch mit einer Schweißstromquelle verbunden. Ein Lichtbogen brennt zwischen der Wolframelektrode und dem Werkstück. Das Werkstück wird dabei zumindest teilweise aufgeschmolzen und bildet dort das Schmelzbad. Zumeist wird die Wolframelektrode als Kathode verwendet und das Werkstück als Anode, wobei Elektronen von der Wolframelektrode aus in das Werkstück übergehen.

Im Gegensatz zum Metallschutzgasschweißen (MSG-Schweißen) schmilzt die Wolframelektrode beim Wolfram-Inertgasschweißen nicht ab. Durch das Abschmelzen einer Drahtelektrode in einem Schweißbrenner zum Metallschutzgasschweißen kann es zu einer Überhitzung und Verdampfung dieser Drahtelektrode kommen, wodurch große Mengen an gesundheitsschädlichen Emissionen in Form von Schweißrauch freigesetzt werden. Schweißrauch besteht aus partikelförmigen Schadstoffen (zumeist Metalloxide), die einatembar und alveolengängig sowie toxisch und/oder krebserzeugend sein können. Derartige Emissionspartikel sind besonders gesundheitsschädlich für einen Schweißer.

Beim Metallschutzgasschweißen gehen abgeschmolzene Tropfen der Drahtelektrode in das Schmelzbad über. Die abschmelzende Drahtelektrode fungiert beim Metallschutzgasschweißen gleichzeitig als Schweißzusatz bzw. Zusatzwerkstoff und als Lichtbogenträger. Beim Wolfram-Inertgasschweißen hingegen muss ein Zusatzwerkstoff zusätzlich zugeführt werden. Dieser (beispielsweise drahtförmige) Zusatzwerkstoff wird seitlich in den Lichtbogen eingebracht. Dadurch wird der Zusatzwerkstoff aufgeschmolzen. Schmelzflüssige Tropfen des Zusatzwerkstoffs lösen sich ab und gehen in das Schmelzbad über. Dieser Prozess aus Aufschmelzen der Zusatzwerkstoffs, Bildung des Tropfens, Ablösen des Tropfens und Interaktion des Tropfens mit dem Werkstück wird als Werkstoffübergang bezeichnet.

Beim Metallschutzgasschweißen wird ein Großteil der Energie zum Aufschmelzen der Drahtelektrode durch Elektronen eingebracht, welche von der Drahtelektrode aus in das Werkstück übergehen. Diese von den Elektronen eingebrachte Energie wird als Kondensation bezeichnet. Diese Energie wird über eine vergleichsweise kleine Fläche (namentlich über den Lichtbogenansatz) zugeführt und trägt zu einem großen Teil an der Überhitzung und Verdampfung der Drahtelektrode und somit an der Freisetzung der partikelförmigen Emissionen bei.

Da beim Wolfram-Inertgasschweißen der Zusatzwerkstoff stromlos in den Lichtbogen eingebracht wird, wird der Zusatzwerkstoff nur durch Wärmeleitung und Konvektion erhitzt. Kondensation, also von Elektronen eingebrachte Energie, kommt beim Wolfram-Inertgasschweißen nicht zum Tragen. Somit kommt es beim Wolfram-Inertgasschweißen nicht oder zumindest kaum zum Überhitzen und Verdampfen des Zusatzwerkstoffs.

Das Wolfram-Inertgasschweißen besitzt somit gegenüber dem Metallschutzgasschweißen zwar den Vorteil, dass nur eine sehr geringe Menge an Emissionen freigesetzt werden und insbesondere kaum Schweißrauch entsteht, auch wenn von außen Zusatzwerkstoff eingebracht wird. Andererseits besitzt das Wolfram-Inertgasschweißen gegenüber dem Metallschutzgasschweißen den Nachteil, dass das Abschmelzen des Zusatzwerkstoffs mit einer geringeren Effizienz bzw. einer geringeren Abschmelzleistung erfolgt als beim Metallschutzgasschweißen. Weiterhin können durch den fehlenden Stromfluss durch den Zusatzwerkstoff auch keine elektromagnetischen Kräfte wie Lorentzkräfte entstehen. Derartige elektromagnetische Kräfte begünstigen bei stromdurchflossenen Zusatzwerkstoffen das Ablösen schmelzflüssiger Tropfen, was als "Abpinchen" bezeichnet wird. Da der insbesondere drahtförmige Zusatzwerkstoff dem Lichtbogen zumeist seitlich zugeführt wird, geht darüber hinaus die Rotationssymmetrie des Schweißbrenners verloren.

Die Wolframelektrode beim Wolfram-Inertgasschweißen kann beispielsweise als eine Hohlelektrode bzw. Hohlkathode ausgebildet sein. Eine derartige Hohlelektrode weist in ihrem Inneren einen Hohlraum auf. Insbesondere erstreckt sich dieser Hohlraum über die komplette axiale Ausdehnung der Hohlelektrode.

Eine derartige Hohlelektrode ist beispielsweise aus der EP 2 457 681 A1 bekannt. Darin wird beschrieben, dass ein Zusatzwerkstoff durch den Hohlraum der Hohlelektrode hindurch zum Wolfram-Inertgasschweißen zugeführt werden kann. Dadurch kann zwar der Nachteil der fehlenden Rotationssymmetrie behoben werden, jedoch bleiben die Nachteile der geringen Effizienz des Abschmelzens des Zusatzwerkstoffs bzw. der geringeren Abschmelzleistung weiterhin bestehen.

Darüber hinaus wird das Abschmelzen des Zusatzwerkstoffs insbesondere bei Hohlelektroden erschwert, da der Hohlraum in der Hohlelektrode auch zu einer geringeren axialen Energiedichte im Lichtbogen führt. Zudem treten auch bei einem derartig zugeführten Zusatzwerkstoff keine elektromagnetischen Kräfte auf, und es wird keine Energie von Elektronen eingebracht.

Der Erfindung liegt daher die Aufgabe zu Grunde, das Zuführen eines Zusatzwerkstoffs beim Wolfram-Inertgasschweißen zu verbessern und mit einer höheren Effizienz durchzuführen.

Offenbarung der Erfindung

Diese Aufgabe wird durch ein Verfahren zum Wolfram-Inertgasschweißen sowie einen Schweißbrenner zum Wolfram-Inertgasschweißen mit den Merkmalen der unabhängigen Patentansprüche gelöst. Vorteilhafte Ausgestaltungen sind Gegenstand der jeweiligen Unteransprüche sowie der nachfolgenden Beschreibung.

Bei einem erfindungsgemäßen Verfahren zum Wolfram-Inertgasschweißen brennt ein Lichtbogen zwischen einer nicht abschmelzenden Elektrode und einem Werkstück. Die Elektrode weist in ihrem Inneren einen Hohlraum auf, wobei ein elektrisch leitender Zusatzwerkstoff durch den Hohlraum der Elektrode in Richtung des Werkstücks zugeführt wird. Dieser Zusatzwerkstoff wird bestromt.

Die Elektrode mit dem Hohlraum in ihrem Inneren wird in der nachfolgenden Beschreibung als Hohlelektrode bezeichnet. Der Zusatzwerkstoff ist insbesondere drahtförmig ausgebildet. Insbesondere ist der Zusatzwerkstoff von der Hohlelektrode elektrisch isoliert.

Die Elektrode kann dabei als Kathode verwendet werden, das Werkstück als Anode. Auch eine Verwendung der Elektrode als Anode und eine Verwendung des Werkstücks als Kathode ist denkbar. Die Elektrode wird insbesondere als Kathode verwendet, wenn die Elektrode aus Wolfram, aus Hafnium oder aus Wolfram mit Dotierungen (beispielsweise Cer, Thorium, Lanthan und/oder andere seltene Erden) ausgebildet ist. Die Elektrode wird insbesondere als Anode verwendet, wenn die Elektrode aus Kupfer oder aus Kupfer mit derartigen Dotierungen oder Einsätzen ausgebildet ist.

Vorteile der Erfindung

Durch die Bestromung des Zusatzwerkstoffs wird der Zusatzwerkstoff erwärmt bzw. vorgewärmt, insbesondere auf eine Temperatur von ca. 600°C oder mehr (bis etwa 1000°C). Bei einer herkömmlichen Hohlelektrode wird der Zusatzwerkstoff im Wesentlichen mit Raum- bzw. Umgebungstemperatur dem Schweißprozess zugeführt. Der Zusatzwerkstoff muss dabei zunächst durch den Lichtbogen bzw. durch Wärmeeffekte (Wärmeleitung und Konvektion) des Lichtbogens erwärmt werden, bis der Zusatzwerkstoff abschmilzt. Im Gegensatz dazu wird der Zusatzwerkstoff erfindungsgemäß bereits vorgewärmt dem Schweißprozess zugeführt. Durch den Stromfluss bzw. durch Elektronen wird dem Zusatzwerkstoff bereits ein Großteil an Energie zugeführt (Kondensation). Durch den Lichtbogen muss dem Zusatzwerkstoff nur eine geringe Energiemenge zugeführt werden, um das Abschmelzen des Zusatzwerkstoffs zu ermöglichen.

Durch den Stromfluss durch den Zusatzwerkstoff sowie aufgrund des elektrischen Widerstands des Zusatzwerkstoffs erfolgt eine Erwärmung des Zusatzwerkstoffs. Diese Erwärmung des Zusatzwerkstoffs wird als Joulesche Wärme bezeichnet. Die Joulesche Wärme hat einen erheblichen Einfluss auf die Bildung von Tropfen des Zusatzwerkstoffs sowie auf eine Temperatur dieser Tropfen. Durch die Erfindung kann die Joulesche Wärme des Zusatzwerkstoffs bewusst ausgenutzt werden.

Durch die Erfindung wird das Zuführen des Zusatzwerkstoffs durch den Hohlraum einer Hohlelektrode derart verbessert, dass das Abschmelzen des Zusatzwerkstoffs mit einer hohen Effizienz erfolgt. Somit können sich auf einfache Weise schmelzflüssige Tropfen des Zusatzwerkstoffs bilden und mit einer hohen Frequenz ablösen und in das Schmelzbad übergehen. Somit kann der komplette Werkstoffübergang mit einer hohen Effizienz durchgeführt werden. Eine Abschmelzleistung wird erhöht. Weiterhin kann ein Einbrand, also die Menge an Energie, die in das Werkstück eingebracht wird, erhöht werden.

Durch die Erfindung werden die Vorteile des Metallschutzgasschweißens und des Wolfram-Inertgasschweißen kombiniert. Die Vorteile des Metallschutzgasschweißens, also ein Werkstoffübergang mit hoher Effizienz, eine hohe Abschmelzleistung und hoher Einbrand, können durch die Erfindung auch für das Wolfram-Inertgasschweißen genutzt werden. Dennoch kommt es beim erfindungsgemäßen Wolfram-Inertgasschweißen nicht zur Verdampfung des Zusatzwerkstoffs. Daher werden keine oder kaum gesundheitsschädlichen Emissionen in Form von Schweißrauch freigesetzt. Des Weiteren wird durch die Zufuhr des Zusatzwerkstoffs innerhalb der Hohlelektrode eine Rotationssymmetrie beim erfindungsgemäßen Wolfram-Inertgasschweißen bzw. des erfindungsgemäßen Schweißbrenners ermöglicht.

Weiterhin bleibt der Vorteil des Wolfram-Inertgasschweißen erhalten, nämlich dass die Abschmelzleistung von dem Energieeintrag in das Werkstück entkoppelt ist und variabel eingestellt werden kann. Insbesondere wird dies durch einen veränderbaren Vorschub bzw. Drahtvorschub und eine einstellbare Bestromung des Zusatzwerkstoffs ermöglicht.

Vorteilhafterweise wird die Elektrode mit einem Schweißstrom bestromt. Der Zusatzwerkstoff wird mit einem Heizstrom unabhängig von dem Schweißstrom bzw. zusätzlich zu dem Schweißstrom bestromt. Stromstärken des Heizstroms und des Schweißstroms werden unabhängig voneinander eingestellt. Der Zusatzwerkstoff ist insbesondere von der Hohlelektrode elektrisch isoliert. Mittels des Schweißstroms wird der Lichtbogen beeinflusst, mittels des Heizstroms die Vorwärmung des Zusatzwerkstoffs. Somit kann die Vorwärmung des Zusatzwerkstoffs unabhängig von dem Lichtbogen eingestellt bzw. vorgenommen werden. Die Vorwärmung des Zusatzwerkstoffs kann somit flexibel eingestellt und angepasst werden. Insbesondere wird der Heizstrom an den Vorschub bzw. Drahtvorschub, an den Durchmesser und/oder an das Material des Zusatzwerkstoffs angepasst.

Vorzugsweise wird der Heizstrom bzw. die Stromstärke des Heizstroms in Abhängigkeit von der Temperatur des Zusatzwerkstoffs geregelt oder gesteuert. Die Temperatur des Zusatzwerkstoffs wird insbesondere messtechnisch erfasst, beispielsweise mittels eines Sensors, beispielsweise eines Thermoelements oder eines Pyrometers. Alternativ oder zusätzlich kann die Temperatur des Zusatzwerkstoffs auch mittels der Heizspannung der Heizstromquelle, welche an den Zusatzwerkstoff angelegt wird, bestimmt werden. Die Bestromung des Zusatzwerkstoffs wird somit derart geregelt bzw. gesteuert, dass sich eine gewünschte Temperatur des Zusatzwerkstoffs einstellt und der Zusatzwerkstoff somit konstant vorgeheizt wird.

Gemäß einer bevorzugten Ausgestaltung der Erfindung wird der Zusatzwerkstoff mit Stromkontaktpunkten einer Heizstromquelle elektrisch verbunden und danach in den Hohlraum der Elektrode eingeführt. An diesen Stromkontaktpunkten wird der Heizstrom auf die Drahtelektrode geführt. Insbesondere wird der Zusatzwerkstoff dabei mittels des Heizstroms zunächst bestromt, bis der Zusatzwerkstoff eine gewünschte Temperatur aufweist. Erst wenn der Zusatzwerkstoff diese gewünschte Temperatur erreicht hat und somit ausreichend vorgeheizt ist, wird der Zusatzwerkstoff in die Hohlelektrode eingeführt.

Bevorzugt wird ein Abstand der Stromkontaktpunkte zueinander verändert. Insbesondere sind die Stromkontaktpunkte derart ausgestaltet, dass deren Positionen auf dem Zusatzwerkstoff relativ zueinander verändert werden können. Beispielsweise sind derartige Stromkontaktpunkte als Rollen oder Schleifkontakte ausgebildet. Alternativ oder zusätzlich wird bevorzugt eine Stromstärke der Bestromung des Zusatzwerkstoffs, insbesondere die Stromstärke des Heizstroms, verändert. Mittels dieses Abstands der Stromkontaktpunkte bzw. dieser Stromstärke kann die Vorwärmung bzw. die Temperatur des Zusatzwerkstoffs flexibel eingestellt werden. Insbesondere werden der Abstand und/oder die Stromstärke derart eingestellt, dass der Zusatzwerkstoff nicht überhitzt und es nicht zu einem Verdampfen des Zusatzwerkstoffs kommt.

Vorzugsweise wird eine Joulesche Wärme des Zusatzwerkstoffs beeinflusst bzw. eingestellt. Gemäß dem Joulesches Gesetz ist eine erzeugte Wärme an einem elektrischen Widerstand proportional zu der am elektrischen Widerstand umgesetzten elektrischen Leistung sowie einer entsprechenden Zeitdauer. Als Joulesche Wärme wird dabei eine Wärmeenergie pro Zeit bezeichnet, welche durch fortwährende Verluste von elektrischer Energie in einem Leiter aufgrund der Stromstärke und des Widerstandsbelags (elektrischer Widerstand des Leiters bezogen auf dessen Länge) entsteht.

Mittels der Stromkontaktpunkte kann eine freie Drahtlänge *l* eingestellt werden. Diese freie Drahtlänge *l* ist insbesondere der Abstand der Stromkontaktpunkte zueinander. Mittels dieser freien Drahtlänge *l* kann die durch den Heizstrom (mit der Stromstärke *I*) umgesetzte elektrische Leistung *P* an dem Zusatzwerkstoff gemäß folgender Formel eingestellt werden:

$$P = I^2 R = I^2 \rho \frac{l}{A}$$

Dabei ist *A* die Querschnittsfläche des Zusatzwerkstoffs. Dabei bietet es sich insbesondere an, einen drahtförmigen Zusatzwerkstoff zu verwenden. $\rho$ ist der spezifische elektrische Widerstand des Zusatzwerkstoffs.

Die Joulesche Wärme $\Delta W$ über eine Zeitdauer $\Delta t$ ergibt sich aus dieser elektrischen Leistung:

$$\Delta W = P\Delta t = I^2 \rho \frac{l}{A} \Delta t$$

Vorzugsweise wird der Zusatzwerkstoff in Abhängigkeit von einem Vorschub bzw. einem Drahtvorschub des Zusatzwerkstoffs bestromt. Durch das Abschmelzen des Zusatzwerkstoffs, muss der Zusatzwerkstoff nachgeführt bzw. vorgeschoben werden. Insbesondere bietet sich dabei ein drahtförmiger Zusatzwerkstoff an, der mit einer (insbesondere variablen) Vorschubgeschwindigkeit nachgeführt wird. Die Vorwärmung bzw. Erwärmung des Zusatzwerkstoffs wird somit mit dem Vorschub gekoppelt. Insbesondere für manuelles Schweißen wird der Heizstrom bzw. die Bestromung des Zusatzwerkstoffs automatisiert an den Drahtvorschub angepasst. Der Schweißer muss somit lediglich den Drahtvorschub einstellen, die Bestromung wird automatisch eingestellt.

Der Drahtvorschub kann weiterhin insbesondere in Abhängigkeit von einer Schweißgeschwindigkeit und/oder an ein Spaltmaß bzw. eine Spaltbreite des Werkstücks angepasst werden. Das Spaltmaß bzw. die Spaltbreite des Werkstücks beschreibt dabei das zu füllende Volumen, welches mit dem abgeschmolzenen Zusatzwerkstoff gefüllt werden soll. Das abzuschmelzende Volumen des Zusatzwerkstoffs wird somit an das zu füllende Volumen angepasst.

Insbesondere kann die Stromstärke der Bestromung des Zusatzwerkstoffs erhöht werden, wenn der Vorschub erhöht wird. Die Erwärmung des Zusatzwerkstoffs wird konstant gehalten, und die Tropfen lösen sich mit einer höheren Frequenz von dem Zusatzwerkstoff ab. Somit kann der Zusatzwerkstoff mit höherem Vorschub nachgeführt werden. Wird der Vorschub verlangsamt, kann demgemäß die Stromstärke verringert werden.

Gemäß einer bevorzugten Ausgestaltung der Erfindung wird ein Vorschub des Zusatzwerkstoffs derart variiert, dass dem Vorschub eine oszillierende Bewegung in Vorschubrichtung überlagert wird. Durch eine derartige Variation des Vorschubs wird eine Oszillation des Zusatzwerkstoffs angeregt. Der Vorschub des Zusatzwerkstoffs erfolgt somit nicht kontinuierlich, sondern oszillierend. Durch diese überlagerte oszillierende Bewegung wird der Zusatzwerkstoff mit einer bestimmten Frequenz in Richtung des Werkstücks und in die entgegengesetzte Richtung von dem Werkstück weg bewegt. Insbesondere durch die Bewegung des Zusatzwerkstoffs von dem Werkstück weg, wird ein Bereich zwischen dem Tropfen und dem übrigen, nicht aufgeschmolzenen Zusatzwerkstoff verjüngt. Somit wird das Ablösen des Tropfens begünstigt. Durch die überlagerte oszillierende Bewegung wird das Ablösen der Tropfen angeregt bzw. aktiv unterstützt. Anschaulich gesprochen werden die Tropfen durch die überlagerte oszillierende Bewegung von dem Zusatzwerkstoff "abgeschüttelt".

Weiter bevorzugt entspricht eine Oszillationsfrequenz dieser (überlagerten) oszillierenden Bewegung des Zusatzwerkstoffs im Wesentlichen einer Eigenfrequenz bzw. einer Resonanzfrequenz eines von dem Zusatzwerkstoff abschmelzenden Tropfens. Durch die überlagerte oszillierende Bewegung des Zusatzwerkstoffs wird der Tropfen insbesondere zu einer Schwingung im Bereich seiner Eigenfrequenz angeregt. Somit wird das Ablösen des Tropfens weiterhin unterstützt bzw. angeregt. Vorzugsweise beträgt die Oszillationsfrequenz der (überlagerten) oszillierenden Bewegung des Zusatzwerkstoffs zwischen 350 Hz und 450 Hz, insbesondere 400 Hz.

Es ist zweckmäßig, wenn dem Zusatzwerkstoff ein Zusatzgas zugeführt wird. Insbesondere kann das Zusatzgas durch den Hohlraum zugeführt werden. Das Zusatzgas strömt dabei in Richtung des Werkstücks durch den Hohlraum, insbesondere um den Zusatzwerkstoff herum bzw. an diesem entlang. Mittels des Zusatzgases wird insbesondere ein Druck auf den Tropfen des Zusatzwerkstoffes ausgeübt, weiter insbesondere wird eine Oberflächenspannung des Tropfens verringert. Somit kann das Ablösen der Tropfen angeregt bzw. aktiv unterstützt werden. Weiterhin kann mittels des insbesondere inerten oder reduzierenden Zusatzgases ein Oxidieren des erhitzten Zusatzwerkstoffs verhindert werden.

Das Zusatzgas kann aber auch ein aktives Gas sein. Zusammensetzung und Menge des Gases können variiert werden, insbesondere auch während des Schweißprozesses. Insbesondere wird Sauerstoff oder eine Gasmischung mit Sauerstoffanteil als Zusatzgas verwendet. Durch den Sauerstoff wird insbesondere die Oberflächenspannung gesenkt.

Oxidierende Gase bzw. oxidierende Gasmische als Zusatzgas werden dabei insbesondere über den erhitzten Zusatzwerkstoff zugeführt. Insbesondere wird ein oxidierendes Gas bzw. Gasgemisch von der Elektrode separiert, um ein (sofortiges) Zerstören der Elektrode zu verhindern. Bevorzugt wird ein Gasgemisch aus Argon und Sauerstoff (insbesondere mit einem maximalen Sauerstoffanteil von 10%) oder ein Gasgemisch aus Argon und Kohlendioxid (insbesondere mit einem maximalen Kohlendioxidanteil von 20%) als Zusatzgas zugeführt.

Weiter bevorzugt wird Argon, ein Gasgemisch aus Argon und Wasserstoff (insbesondere mit einem maximalen Wasserstoffanteil von 10%), ein Gasgemisch aus Argon und Stickstoff (insbesondere mit einem maximalen Stickstoffanteil von 10%) oder ein Gasgemisch aus Argon und Helium (insbesondere mit einem maximalen Heliumanteil von 90%) als Zusatzgas verwendet.

Insbesondere wird dem Schweißprozess ein Schutzgas zugeführt. Der Schweißbrenner umfasst dafür eine zweckmäßige Schutzgasdüse. Das Zusatzgas wird dabei zusätzlich zu dem Schutzgas und unabhängig von diesem dem Zusatzwerkstoff zugeführt.

Die Erfindung betrifft weiterhin einen Schweißbrenner zum Wolfram-Inertgasschweißen. Ausgestaltungen dieses erfindungsgemäßen Schweißbrenners ergeben sich aus der obigen Beschreibung des erfindungsgemäßen Verfahrens in analoger Art und Weise.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Kurze Beschreibung der Zeichnung

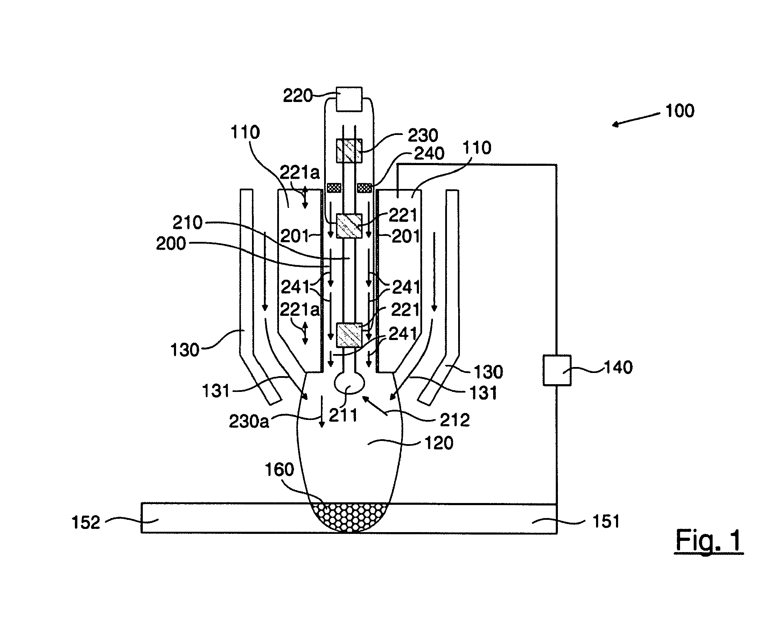

Figur 1    zeigt eine bevorzugte Ausgestaltung eines erfindungsgemäßen Schweißbrenners zum Wolfram-Inertgasschweißen.

Ausführungsform(en) der Erfindung

In Figur 1 ist eine bevorzugte Ausgestaltung eines erfindungsgemäßen Schweißbrenners zum Wolfram-Inertgasschweißen schematisch dargestellt und mit 100 bezeichnet. Der Schweißbrenner 100 ist dazu eingerichtet, eine bevorzugte Ausführungsform eines erfindungsgemäßen Verfahrens durchzuführen. Mittels des Schweißbrenners 100 wird durch einen Fügevorgang ein erstes Werkstück 151 mit einem zweiten Werkstück 152 verschweißt.

Der Schweißbrenner 100 weist eine Elektrode 110 auf, die sich zu ihrer einen dem Werkstück zugewandten Seite hin verjüngt. Die Elektrode 110 ist als eine Hohlelektrode ausgebildet und weist in ihrem Inneren einen zylinderförmigen Hohlraum 200 auf, der sich über die komplette axiale Ausdehnung der Elektrode 110 hin erstreckt.

Das erste Werkstück 151 und die Hohlelektrode 110 sind mit einer Schweißstromquelle 140 elektrisch verbunden. Die Hohlelektrode 110 wird somit mit einem Schweißstrom bestromt.

Die Hohlelektrode 110 ist in diesem speziellen Beispiel aus Wolfram ausgebildet und wird als Kathode verwendet. Das erste Werkstück 151 wird in diesem speziellen Beispiel als Anode verwendet. Es sei angemerkt, das die Hohlelektrode 110 auch als Kathode verwendet werden kann und das erste Werkstück 151 als Anode, beispielsweise wenn die Hohlelektrode 110 aus Kupfer ausgebildet ist.

Ein Lichtbogen 120 brennt zwischen der Hohlelektrode 110 und dem ersten Werkstück 151. Durch den Lichtbogen 120 werden das erste und das zweite Werkstück 151 und 152 zumindest teilweise aufgeschmolzen, wodurch ein Schmelzbad 160 entsteht.

Der Schweißbrenner 100 weist weiterhin eine Schutzgasdüse 130 auf, um dem Schweißprozess bzw. in Richtung des Lichtbogens 120 bzw. in Richtung des Schweißbads 160 ein Schutzgas in Form einer Schutzgasströmung zuzuführen, angedeutet durch Bezugszeichen 131.

Dem Schweißprozess wird weiterhin ein elektrisch leitender Zusatzwerkstoff 210 zugeführt, insbesondere durch eine Vorschubvorrichtung 230. Der Zusatzwerkstoff 210 ist drahtförmig ausgebildet und wird durch den Hohlraum 200 zugeführt in Richtung 230a des ersten und zweiten Werkstücks 151 und 152. Der Hohlraum 200 weist eine elektrische Isolierung 201 auf, um den Zusatzwerkstoff 210 von der Hohlelektrode 110 elektrisch zu isolieren.

Bevor der Zusatzwerkstoff 210 in die Hohlelektrode 110 eingeführt wird, wird der Zusatzwerkstoff 210 mit zwei Stromkontaktpunkten 221 einer Heizstromquelle 220 elektrisch verbunden. Die Stromkontaktpunkte 221 sind dabei insbesondere als Schleifkontakt ausgebildet. Mittels der Stromkontaktpunkte 221 und der Heizstromquelle 220 wird der Zusatzwerkstoff 210 mit einem Heizstrom bestromt.

Durch das Bestromen des Zusatzwerkstoffs 210 mit dem Heizstrom erhitzt sich der Zusatzwerkstoff 210. Wenn der Zusatzwerkstoff 210, hier Draht, eine vorbestimmte Temperatur von bspw. 600°C erreicht hat, wird mit dem Vorschub begonnen. Der Zusatzwerkstoff 210 wird dabei so weit in den Hohlraum 200 eingeführt, dass eine Spitze 212 des Zusatzwerkstoffs 210 aus dem Hohlraum 200 in Richtung des Werkstücks 151 hinausragt.

Durch den Lichtbogen 120 wird diese Spitze 212 des Zusatzwerkstoffs 210 weiter erwärmt. Durch diese Erwärmung wird der Zusatzwerkstoff 210 an der Spitze 212 aufgeschmolzen. Somit bildet sich ein schmelzflüssiger Tropfen 211 des Zusatzwerkstoffs 210.

Der Tropfen 211 löst sich letztendlich von dem Zusatzwerkstoff 210 ab, geht in das Schmelzbad 160 über und bildet eine Schweißnaht (Fügeverbindung zwischen den Werkstücken 151 und 152). Die Bildung des Tropfens 211 sowie das Ablösen des Tropfens 211 von dem Zusatzwerkstoff 210 und der Übergang in das Schmelzbad 160 wird als Werkstoffübergang bezeichnet.

Der Abstand der Stromkontaktpunkte 221 relativ zueinander ist während des Schweißprozesses veränderbar. Die Stromkontaktpunkte können auch vor dem Hohlraum angeordnet sein, um die Zugänglichkeit zu verbessern. Beide Stromkontaktpunkte 221 können dabei unabhängig voneinander entlang des Zusatzwerkstoffs 210 verschoben werden, angedeutet durch den Doppelpfeil 221a. Durch Einstellen des Abstands der Stromkontaktpunkte 221 und durch Einstellen der Stromstärke des Heizstroms wird insbesondere eine Joulesche Wärme des Zusatzwerkstoffs 210 eingestellt.

Die Joulesche Wärme ist dabei die Wärmeenergie pro Zeit, um welche der Zusatzwerkstoff 210 aufgrund seines elektrischen Widerstands und aufgrund des Heizstroms erhitzt wird.

Mittels der Vorschubvorrichtung 230 kann der Zusatzwerkstoff 210 nachgeführt bzw. vorgeschoben werden bzw. weiter in den Hohlraum 200 eingeführt werden. Eine Vorschubrichtung, in welche ein entsprechender Vorschub erfolgt, entspricht dabei der Richtung 230a, die zu den Werkstücken 151 und 152 hin gerichtet ist. Der Zusatzwerkstoff 210 kann beispielsweise auf einer Rolle aufgewickelt vorliegen und durch die Vorschubvorrichtung 230 abgewickelt werden.

Der Vorschub, also die Vorschubgeschwindigkeit des Drahts, kann durch die Vorschubvorrichtung 230 dabei zweckmäßig variiert werden. Insbesondere wird der Vorschub derart variiert, dass dem Vorschub eine oszillierende Bewegung des Zusatzwerkstoffs 210 in Vorschubrichtung überlagert wird. Der Zusatzwerkstoff 210 oszilliert dabei in und entgegen der Vorschubrichtung 230a. Eine Frequenz dieser Oszillation entspricht dabei einer Eigenfrequenz des Tropfens 211 und beträgt insbesondere 400 Hz. Das Ablösen des Tropfens 211 wird somit verstärkt angeregt.

Der Schweißbrenner 100 weist weiterhin eine (nur schematisch angedeutete) Zusatzgaszufuhr 240 auf. Mittels der Zusatzgaszufuhr 240 wird dem Zusatzwerkstoff 210 ein Zusatzgas in Form einer Zusatzgasströmung zugeführt, angedeutet durch das Bezugszeichen 241. Die Zusatzgasströmung 241 strömt dabei in Vorschubrichtung 230a axial um den Zusatzwerkstoff 210 herum. Durch die Zusatzgasströmung 241 strömt dabei Gas auf den Tropfen 211, wodurch eine Oberflächenspannung des Tropfens 211 verringert und das Ablösen des Tropfens 211 weiterhin angeregt wird.

Beispielsweise wird ein Gasgemisch aus Argon und Sauerstoff mit einem Sauerstoffanteil von 10% als Zusatzgas in Form der Zusatzgasströmung 241 zugeführt. Durch die elektrische Isolierung 201 zwischen Zusatzwerkstoff 210 und Hohlelektrode 110 ist die Zusatzgasströmung ebenfalls von der Hohlelektrode 110 separiert, so dass eine Zerstörung der Hohlelektrode 110 durch das Zusatzgas vermieden werden kann.

Bezugszeichenliste

| | |
|---|---|
| 100 | Schweißbrenner |
| 110 | Elektrode, Hohlelektrode |
| 120 | Lichtbogen |
| 130 | Schutzgasdüse |
| 131 | Schutzgasströmung |
| 140 | Schweißstromquelle |
| 151 | erstes Werkstück |
| 152 | zweites Werkstück |
| 160 | Schmelzbad |
| 200 | Hohlraum |
| 201 | elektrische Isolierung |
| 210 | drahtförmiger Zusatzwerkstoff |
| 211 | schmelzflüssiger Tropfen |
| 212 | Spitze |
| 220 | Heizstromquelle |
| 221 | Stromkontaktpunkt, Schleifkontakt |
| 221a | Doppelpfeil |
| 230 | Vorschubvorrichtung |
| 230a | Richtung, Vorschubrichtung |
| 240 | Zusatzgaszufuhr |
| 241 | Zusatzgasströmung |

**Patentansprüche**

**1.** Verfahren zum Wolfram-Inertgasschweißen,

- wobei ein Lichtbogen (120) zwischen einer nicht abschmelzenden Elektrode (110) und einem Werkstück (151) brennt,
- wobei die Elektrode (110) in ihrem Inneren einen Hohlraum (200) aufweist,
- wobei ein elektrisch leitender Zusatzwerkstoff (210) durch den Hohlraum (200) der Elektrode (110) in Richtung (230a) des Werkstücks (151) zugeführt wird,

**dadurch gekennzeichnet, dass**

- der Zusatzwerkstoff (210) bestromt wird.

**2.** Verfahren nach Anspruch 1, wobei der Zusatzwerkstoff (210) in Abhängigkeit von Vorschub, Temperatur und/oder Material des Zusatzwerkstoffs (210) bestromt wird.

**3.** Verfahren nach Anspruch 1 oder 2, wobei die Elektrode (110) mit einem Schweißstrom bestromt wird und der Zusatzwerkstoff (210) mit einem Heizstrom unabhängig von dem Schweißstrom bestromt wird.

**4.** Verfahren nach Anspruch 3, wobei der Heizstrom in Abhängigkeit von einer Temperatur des Zusatzwerkstoffs (210) geregelt oder gesteuert wird.

**5.** Verfahren nach einem der vorstehenden Ansprüche, wobei der Zusatzwerkstoff (210) mit Stromkontaktpunkten (221) einer Heizstromquelle (220) elektrisch verbunden wird und danach in den Hohlraum (200) der Elektrode (110) eingeführt wird.

**6.** Verfahren nach Anspruch 5, wobei ein Abstand der Stromkontaktpunkte (221) zueinander verändert wird.

**7.** Verfahren nach einem der vorstehenden Ansprüche, wobei eine Joulesche Wärme des Zusatzwerkstoffs (210) eingestellt wird.

**8.** Verfahren nach einem der vorstehenden Ansprüche, wobei der Vorschub des Zusatzwerkstoffs (210) abhängig von einer Schweißgeschwindigkeit und/oder einem Spaltmaß des Werkstücks (151) eingestellt wird.

**9.** Verfahren nach einem der vorstehenden Ansprüche, wobei ein Vorschub des Zusatzwerkstoffs (210) derart variiert wird, dass dem Vorschub eine oszillierende Bewegung des Zusatzwerkstoffs (210) in Vorschubrichtung (230a) überlagert wird.

**10.** Verfahren nach Anspruch 9, wobei eine Oszillationsfrequenz dieser oszillierenden Bewegung des Zusatzwerkstoffs (210) im Wesentlichen einer Eigenfrequenz eines von dem Zusatzwerkstoff (210) abschmelzenden Tropfens (211) entspricht.

11. Verfahren nach Anspruch 9 oder 10, wobei die Oszillationsfrequenz dieser oszillierenden Bewegung des Zusatzwerkstoffs (210) zwischen 350 Hz und 450 Hz, insbesondere 400 Hz, beträgt.

12. Verfahren nach einem der vorstehenden Ansprüche, wobei dem Zusatzwerkstoff (210) ein Zusatzgas (240) zugeführt wird.

13. Schweißbrenner (100) zum Wolfram-Inertgasschweißen,

- mit einer nicht abschmelzenden Elektrode (110), wobei die Elektrode (110) in ihrem Inneren einen Hohlraum (200) aufweist,
- wobei der Schweißbrenner (100) dazu eingerichtet ist, einen elektrisch leitenden Zusatzwerkstoff (210) durch den Hohlraum (200) der Elektrode (110) in Richtung (230a) des Werkstücks (151) zuzuführen,

**dadurch gekennzeichnet, dass**

- der Schweißbrenner (100) dazu eingerichtet ist, den Zusatzwerkstoff (210) zu bestromen.

14. Schweißbrenner (100) nach Anspruch 13, wobei der Zusatzwerkstoff (210) von der Elektrode (110) elektrisch isoliert ist.

15. Schweißbrenner (100) nach Anspruch 13 oder 14, wobei die Elektrode (110) dazu eingerichtet ist, mit einem Schweißstrom bestromt zu werden, und wobei der Zusatzwerkstoff (210) dazu eingerichtet ist, mit einem Heizstrom unabhängig von dem Schweißstrom bestromt zu werden.

16. Schweißbrenner (100) nach einem der Ansprüche 13 bis 15, der dazu eingerichtet ist, den Zusatzwerkstoff (210) mit Stromkontaktpunkten (221) einer Heizstromquelle (220) elektrisch zu verbinden und danach in den Hohlraum (200) der Elektrode (110) einzuführen.

17. Schweißbrenner (100) nach einem der Ansprüche 13 bis 16, mit einer Zusatzgaszufuhr (240), die dazu eingerichtet ist, dem Zusatzwerkstoff (210) ein Zusatzgas (241) zuzuführen.

18. Schweißbrenner (100) nach einem der Ansprüche 13 bis 17, mit einer Vorschubvorrichtung (230), die dazu eingerichtet ist, einen Vorschub des Zusatzwerkstoffs (210) derart zu variieren, dass dem Vorschub eine oszillierende Bewegung in Vorschubrichtung (230a) überlagert wird.

**Fig. 1**

**Europäisches Patentamt**
**European Patent Office**
**Office européen des brevets**

# EUROPÄISCHER RECHERCHENBERICHT

Nummer der Anmeldung

EP 14 00 1321

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 994 659 A (OFFER HENRY PETER [US]) 30. November 1999 (1999-11-30) | 1-8, 12-17 | INV. B23K9/10 |
| Y | * Spalte 2, Zeile 22 - Zeile 52; Ansprüche 15-18; Abbildungen 1-10 * | 9-11,18 | B23K9/12 B23K9/167 |
| | * Spalte 4, Zeile 37 - Spalte 5, Zeile 54 * | | B23K9/29 |
| | * Spalte 7, Zeile 10 - Zeile 67 * | | |
| | * Spalte 9, Zeile 3 - Zeile 16 * | | |
| | * Spalte 12, Zeile 17 - Spalte 15, Zeile 2 * | | |
| | ----- | | |
| Y | EP 2 644 306 A1 (PLASCH SIEGFRIED [AT]) 2. Oktober 2013 (2013-10-02) * Absätze [0006], [0021]; Anspruch 2; Abbildung 1 * | 9-11,18 | |
| | ----- | | |
| Y | US 2012/298630 A1 (STOUTAMIRE MARK [US]) 29. November 2012 (2012-11-29) * Absätze [0013] - [0014]; Anspruch 3 * | 9-11,18 | |
| | ----- | | |

RECHERCHIERTE SACHGEBIETE (IPC)

B23K

Der vorliegende Recherchenbericht wurde für alle Patentansprüche erstellt

| Recherchenort | Abschlußdatum der Recherche | Prüfer |
|---|---|---|
| München | 12. November 2014 | Hernanz, Sonsoles |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 00 1321

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-11-2014

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 5994659 | A | 30-11-1999 | DE | 69735520 | T2 | 28-09-2006 |
| | | | EP | 0816001 | A2 | 07-01-1998 |
| | | | ES | 2260777 | T3 | 01-11-2006 |
| | | | JP | 3331148 | B2 | 07-10-2002 |
| | | | JP | H1080776 | A | 31-03-1998 |
| | | | US | 5714735 | A | 03-02-1998 |
| | | | US | 5994659 | A | 30-11-1999 |
| EP 2644306 | A1 | 02-10-2013 | KEINE | | | |
| US 2012298630 | A1 | 29-11-2012 | AU | 2012258800 | A1 | 16-01-2014 |
| | | | CA | 2840601 | A1 | 29-11-2012 |
| | | | CN | 103857489 | A | 11-06-2014 |
| | | | EP | 2714318 | A1 | 09-04-2014 |
| | | | KR | 20140090091 | A | 16-07-2014 |
| | | | US | 2012298630 | A1 | 29-11-2012 |
| | | | WO | 2012162436 | A1 | 29-11-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 2457681 A1